# EUROPEAN PATENT APPLICATION

(11) **EP 3 453 900 A1**
(43) Date of publication of application: **13.03.2019**
(21) Application number: 17809919.8
(22) Date of filing: 16.03.2017
(51) Int. Cl.: F16B 39/30, F16B 33/02, F16B 39/284

(54) **BOLT**

(30) Priority: 06.06.2016 JP 2016112388
(71) Applicant: Aoyama Seisakusho Co., Ltd., Oguchi-cho Niwa-gun Aichi 480-0198 (JP)
(72) Inventor: IKAMI, Takashi, Niwa-gun, Aichi 480-0198 (JP); KOGA, Kazuhiro, Niwa-gun, Aichi 480-0198 (JP); MATSUNAMI, Shigeki, Niwa-gun, Aichi 480-0198 (JP); FUJIMOTO, Yukinori, Niwa-gun, Aichi 480-0198 (JP)
(74) Representative: Mewburn Ellis LLP
(86) International application number: PCT/JP2017/010733
(87) International publication number: WO 2017/212735

(57) **Abstract**

The present invention provides a bolt that can exhibit a looseness-prevention function even though the bolt is repeatedly attached and detached. A bolt 1 includes a groove 4 that extends along a helix of a screw thread 3 and that is provided on a peak 31 of the screw thread 3. Further, the bolt is configured to include a plurality of the grooves 4 being spaced apart from each other along a helical direction of the screw thread 3.

## Description

### TECHNICAL FIELD

The present invention relates to a bolt.

### BACKGROUND ART

To take a conventional measure for preventing looseness of a bolt is known. Patent Literature 1 discloses a structure in which screw threads of the bolt are crushed to reduce a space between the screw threads that are adjacent to each other, as a structure of the bolt to which the above measure is taken. According to the structure disclosed in Patent Literature 1, it is possible to make each of male threads cut into a corresponding female thread, so that the bolt can be prevented from loosening.

### CITATION LIST

### PATENT LITERATURE

Patent Literature 1: JP 2002-122114 A

Incidentally, according to the structure disclosed in Patent Literature 1, when each of the male threads cuts into the female thread, parts of both the male thread and the female thread are scraped. Therefore, although the male thread and the female thread are screwed again after a screwed state therebetween is released, a looseness-prevention function does not become comparable to an initial level. Namely, when the looseness-prevention function is released after its function is exhibited, it is difficult to exhibit the looseness-prevention function again. Further, handling of damage of the female thread often becomes more difficult than handling of damage of the bolt.

### SUMMARY OF INVENTION

### TECHNICAL PROBLEMS

An inventor of the present invention has made intensive studies to solve the above matter. It is a problem of the present invention to provide a bolt that can exhibit a looseness-prevention function even though the bolt is repeatedly attached and detached. It is a further problem of the present invention to provide a bolt that can exhibit the looseness-prevention function while restraining a female thread from being damaged.

### SOLUTIONS TO PROBLEMS

In order to solve the above problems, the present invention adopts the following means. A first means has a configuration that a bolt includes a groove that extends along a helix of a screw thread and that is provided on a peak of the screw thread, the bolt includes a plurality of the grooves being spaced apart from each other along a helical direction of the screw thread.

A second means, according to the first means, has a configuration that a part of the peak of the screw thread positioned outside the groove is positioned more outside than an imaginary surface disposed on an extension of a flank formed by a base of the screw thread.

A third means, according to the first or second means, has a configuration that the plurality of grooves is provided on the screw thread within one round of the screw thread along a circumferential direction of the bolt.

A fourth means, according to any of the first to third means, has a configuration that the grooves that are adjacent to each other in an axial direction of the bolt are arranged so that end portions of the grooves are displaced from each other in the circumferential direction.

### ADVANTAGEOUS EFFECTS OF INVENTION

According to the first means, a looseness-prevention function can be obtained even though the bolt is repeatedly used.

According to the second means, since the part that is positioned more outside than the imaginary surface is forced toward a groove side by a screwed female thread to be elastically deformed, friction force between the screw thread and the female thread is easily obtained. Further, a workload in fastening the bolt to the female thread can be restrained from increasing.

According to the third means, places in which the grooves are formed can be scattered in the circumferential direction of the bolt.

According to the fourth means, the places in which the grooves are formed can be scattered in the circumferential direction of the bolt in relation to an axial position of the bolt.

### BRIEF DESCRIPTION OF DRAWINGS

FIG. 1 is a side view of a bolt of an exemplary embodiment.
FIG. 2 is a partial enlarged view of II region in FIG. 1.
FIG. 3 is a schematic view illustrating a cross section of the vicinity of III region in FIG. 2.
FIG. 4 is a schematic view illustrating a state in which a screw thread shown in FIG. 3 is engaged with a female thread.
FIG. 5 is a schematic view illustrating a cross section of the vicinity of the screw thread in a modified example.
FIG. 6 is a schematic view illustrating a cross section taken on line VI-VI in FIG. 2.

### DESCRIPTION OF EMBODIMENT

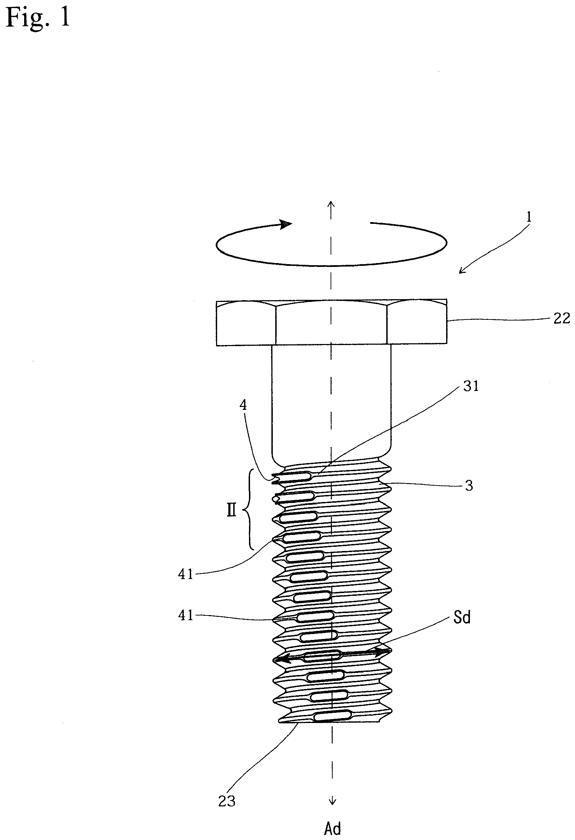

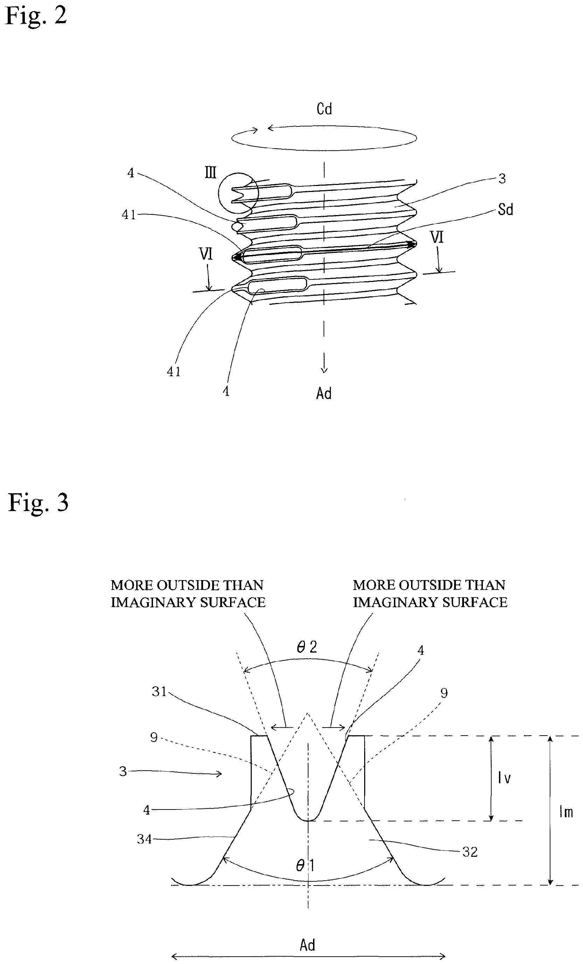

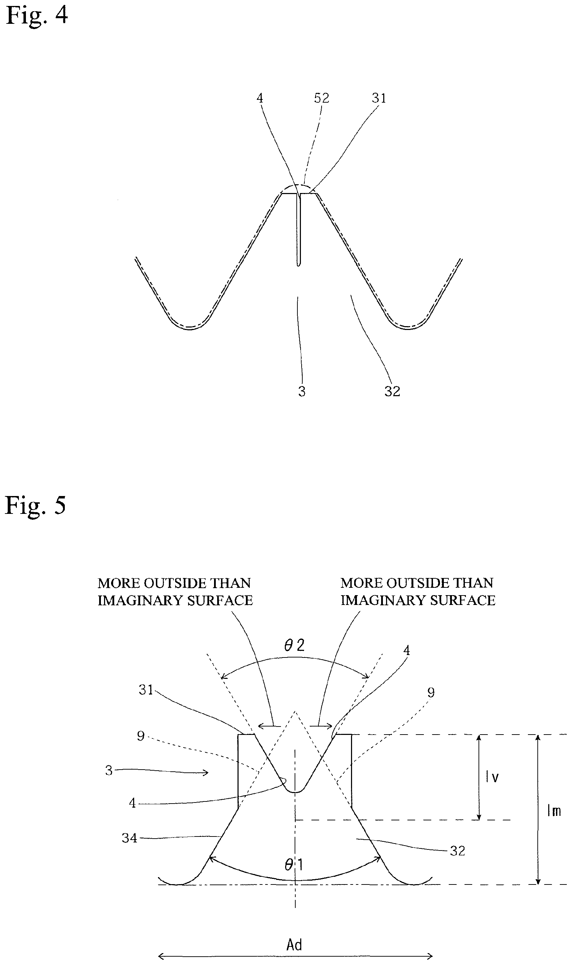

A description of an exemplary embodiment will be made hereinafter. FIG. 1 is a side view of a bolt 1 of the present exemplary embodiment. FIG. 2 is a partial enlarged view of II region in FIG. 1. FIG. 3 is a schematic view illustrating a cross section of the vicinity of III region in FIG. 2. FIG. 4 is a schematic view illustrating a state in which a screw thread 3 shown in FIG. 3 is engaged with a female thread 52.

According to the present exemplary embodiment, a bolt 1 includes grooves 4 on a peak 31 of a screw thread 3 formed into a helical shape. Each of these grooves 4 is formed to extend along in a helical direction Sd of the screw thread 3 and a plurality of the grooves 4 are arranged to be spaced apart from each other. Hence, on the peak 31 of the screw thread 3, a portion in which the groove 4 is formed and a portion in which the groove 4 is not formed is alternately provided along the peak 31 of the screw thread 3.

The portion in which the groove 4 is formed on the peak 31 of the screw thread 3 can be deformed against pressing force from a female thread 52 to restrain the screw thread 3 from cutting into the female thread 52, as can be understood from the matter shown in FIG. 3 and FIG. 4. Therefore, a looseness-prevention function can be obtained even though the bolt 1 is repeatedly used. Incidentally, the portion in which the groove 4 is not formed on the peak 31 of the screw thread 3 functions in the same way as a conventional screw thread 3.

Flanks 34, each of which is formed into a slant-surface shape, are respectively provided on both outsides of a base 32 of the screw thread 3. The present exemplary embodiment is configured that an angle θ1 formed by the flanks 34 that are disposed on the both outsides of the base 32 of the screw thread 3 is set to 60°. Incidentally, this angle θ1 is also referred to as an angle of a screw thread.

The grooves 4 that are adjacent to each other in an axial direction Ad of the bolt 1 are arranged so that end portions 41 of the grooves 4 are displaced from each other in a circumferential direction Cd of the bolt 1, as can be understood from the matter shown in FIG. 1 and FIG. 2. Therefore, places in which the grooves 4 are formed can be scattered in the circumferential direction Cd of the bolt 1. Incidentally, as shown in FIGS. 1 to 3, each groove 4 of the present exemplary embodiment is provided to divide the peak 31 of the screw thread 3 into two in the axial direction Ad.

The bolt 1 of the present exemplary embodiment is, as shown in FIG. 1 by a bold arrow, so-called a right-handed screw of a type that can be fastened when the bolt 1 is rotated clockwise. According to the present exemplary embodiment, the end portions 41 of the grooves 4 that are adjacent to each other in the axial direction Ad of the bolt 1 are arranged so as to be displaced, from a side of a head portion 22 of the bolt 1 toward a side of a tip 23 that is inserted into the female thread 52, in a counterclockwise direction as seen from the side of the head portion 22. Incidentally, according to the present exemplary embodiment, the grooves 4 that are adjacent to each other in the axial direction Ad of the bolt 1 are arranged so that parts of the grooves 4 overlap each other as seen along the axial direction Ad of the bolt 1. Displacement of each of the end portions 41 of a series of the grooves 4 that continue from the side of the head portion 22 to the side of the tip 23 of the bolt 1 is configured to be within 180° around a central axis of the bolt 1.

Parts of the peak 31 of the screw thread 3 positioned both outsides of the groove 4 provided on the peak 31 of the screw thread 3 of the present exemplary embodiment are positioned more outside than imaginary surfaces 9 disposed on extensions of flanks 34 formed by a base 32 of the screw thread 3, as can be understood from the matter shown in FIG. 3. Since each imaginary surface 9 substantially conforms to the flank 34 of the screw thread 3 of the portion in which the groove 4 is not formed, each portion that is positioned more outside than the imaginary surface 9 tends to earlier come in contact with the female thread 52 than other portions. Since each portion that is positioned more outside than the imaginary surface 9 is a portion that is forced toward a side of the groove 4 by the screwed female thread 52 to be elastically deformed, friction force generated between the screw thread 3 and the female thread 52 can be increased. The present exemplary embodiment is configured so that both each portion that is positioned more outside than the imaginary surface 9 and the base 32 can come in contact with the female thread 52 when the bolt 1 is fastened.

Since the portions in which the groove 4 is not provided are also disposed on the screw thread 3 of the present exemplary embodiment, a workload in fastening the bolt 1 to the female thread 52 can be restrained from increasing. According to the present exemplary embodiment, a length of the portions in which the groove 4 is not provided on the screw thread 3 occupies not less than half of a length of the peak 31 of the helical screw thread 3. That is, the portions in which the groove 4 is provided are configured to be less than half of the screw thread 3.

In order to make a portion of the screw thread 3 of the bolt 1 of the present exemplary embodiment, a basic portion of the screw thread 3 is formed first of all. In order to form the flanks 34 each of which is formed from the base 32 to the peak 31, first rolling is performed to a bar member. Next, second rolling is performed in order to provide the V-shaped grooves 4 on the peak 31 of the screw thread 3 formed by the first rolling. In the second rolling, a part of the screw thread 3 is deformed to be pushed more outside than the imaginary surface 9 when each of the grooves 4 is formed on the peak 31 of the screw thread 3. Incidentally, at each of the portions in which the groove 4 is not formed by the second rolling, a shape formed by the first rolling from the base 32 to the peak 31 of the screw thread 3 remains as it is.

According to the present exemplary embodiment, an angle θ2 forming the groove 4 is set to 40° and a depth lv of the groove 4 is set to not less than half of a height lm of the screw thread 3 as shown in FIG. 3, but the angle forming the groove 4 and the depth lv of the groove 4 may be different from the above form. As shown in FIG. 5, for example, the angle θ2 forming the groove 4 may be set to 60° or the like and the depth lv of the groove 4 may be less than half of the height lm of the screw thread 3. Incidentally, it is preferable that the angle θ2 forming the groove 4 be set within a range from 20° to 90 °.

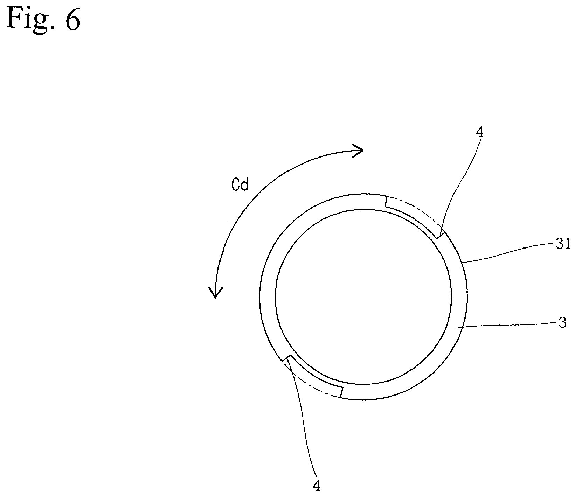

It is desirable that in the bolt 1, the plurality of grooves 4 be provided on the screw thread 3 within one round of the screw thread 3 along a circumferential direction Cd of the bolt 1. The bolt 1 of the present exemplary embodiment has a configuration that two grooves 4 along the helix of the screw thread 3 are provided within one round of the screw thread 3 along the circumferential direction Cd of the bolt 1 as schematically shown in FIG. 6. These grooves 4 are provided so that the grooves 4 are arranged to be substantially evenly spaced in the circumferential direction Cd of the bolt 1. Therefore, portions that are elastically deformed against the female thread 52 can be positioned to be evenly spaced in the circumferential direction Cd of the bolt 1. According to the present exemplary embodiment, the groove 4 at a side of one side surface and the groove 4 at a side of the other side surface are positioned so as to sandwich the central axis of the bolt 1. The grooves 4 of the present exemplary embodiment are configured to be substantially the same length along the helix of the screw thread 3.

Although the exemplary embodiment has been described above, the present invention is not limited to the above-described embodiment, and various modes can be adopted. For example, three or more grooves may be formed on the screw thread within one round of the screw thread along the circumferential direction of the bolt. Also in this case, the grooves can be arranged to be substantially evenly spaced each other in the circumferential direction.

The bolt may be also so-called a left-handed screw of a type that can be fastened when the bolt is rotated counterclockwise. In this case, the grooves that are adjacent to each other in the axial direction of the bolt can be arranged so as to be displaced, from the side of the head portion to which force for rotating the bolt is applied toward the side of the tip that is inserted into the female thread, in a clockwise direction as seen from the side of the head portion.

The angle θ2 formed by the groove may be set to 30°, 20°, or 70°.

Each of a length of the groove and a length between the grooves is not limited to be uniform, and a different length depending on a place is allowed.

The grooves may be formed in the same direction along the axial direction instead of being displaced in the circumferential direction. In this case, one or a plurality of the screw threads may be provided within one round of the screw thread along the circumferential direction of the bolt.

Since the groove is configured so that a part of the peak of the screw thread can be elastically deformed when screwed into the female thread, the shape of the groove is not limited to the V shape. The groove may have, for example, a rectangular shape.

### REFERENCE SIGNS LIST

- 1: bolt
- 3: screw thread
- 4: groove
- 9: imaginary surface
- 31: peak
- 32: base
- 41: end portion
- Ad: axial direction
- Cd: circumferential direction
- Sd: helical direction

## Claims

1. A bolt comprising a groove that extends along a helix of a screw thread and that is provided on a peak of the screw thread,
the bolt comprising a plurality of the grooves being spaced apart from each other along a helical direction of the screw thread.

2. The bolt according to the claim 1, wherein
a part of the peak of the screw thread positioned outside the groove is positioned more outside than an imaginary surface disposed on an extension of a flank formed by a base of the screw thread.

3. The bolt according to the claim 1 or 2, wherein
the plurality of grooves is provided on the screw thread within one round of the screw thread along a circumferential direction of the bolt.

4. The bolt according to any of the claims 1 to 3, wherein
the grooves that are adjacent to each other in an axial direction of the bolt are arranged so that end portions of the grooves are displaced from each other in the circumferential direction of the bolt.
